# FASCICULE DE BREVET EUROPEEN

(11) **EP 2 060 216 B1**
(45) Date de publication et mention de la délivrance du brevet: **30.06.2010**
(21) Numéro de dépôt: 08356143.1
(22) Date de dépôt: 18.11.2008
(51) Int. Cl.: A47J 43/07

(54) **Appareil électroménager de préparation culinaire comportant un support pour un organe de mélange**
Haushaltsgerät zur Essenszubereitung, das eine Halterung für ein Mixorgan umfasst
Electrical kitchen appliance comprising a support for a mixing element

(30) Priorité: 19.11.2007 FR 0708108
(43) Date de publication de la demande: 20.05.2009
(73) Titulaire: Seb SA, 69130 Ecully (FR)
(72) Inventeur: Breviere, Marc, Maidenhead SL6 2PX (GB); Durris, Cyril, 65690 Montignac (FR); Suberbie, Marc, 65360 Momeres (FR)
(74) Mandataire: Kiehl, Hubert

(56) Documents cités:
- DE-A1- 1 904 343
- DE-C1- 3 820 007
- GB-A- 2 347 095

## Description

La présente invention concerne le domaine technique des appareils électroménagers de préparation culinaire comportant un outil rotatif tournant dans un récipient de travail, usuellement appelés blenders.

La présente invention concerne plus particulièrement les appareils du type précité comportant un organe de mélange.

Il est connu du document US 7 040 799 un appareil électroménager de préparation culinaire comportant un organe de mélange monté dans le couvercle du récipient de travail. A cet effet l'organe de mélange comporte une collerette. L'organe de mélange présente un manche creux prolongé à son extrémité inférieure par une cuiller.

Un but de la présente invention est d'améliorer l'utilisation d'un appareil électroménager du type précité.

Un autre but de la présente invention est d'améliorer l'ergonomie d'un appareil électroménager du type précité.

Ces buts sont atteints avec un appareil électroménager de préparation culinaire comportant un outil de travail rotatif monté dans un réceptacle, et un organe de mélange susceptible d'être monté dans une ouverture d'un couvercle associé au réceptacle, ledit organe de mélange s'étendant alors dans ledit réceptacle, ledit outil de travail rotatif étant entraîné au travers du fond dudit réceptacle, du fait que ledit appareil comporte un support latéral prévu pour recevoir l'organe de mélange. Cette disposition permet de faciliter l'utilisation de l'appareil en rendant aisément accessible l'organe de mélange. L'utilisateur peut commencer sa préparation en introduisant les ingrédients par l'ouverture du couvercle. L'organe de mélange placé sur le support latéral est prêt à l'emploi. L'utilisateur peut ensuite mettre en place l'organe de mélange dans l'ouverture du couvercle pour remuer la préparation. L'organe de mélange peut approcher voire atteindre la paroi du réceptacle, pour décoller les aliments. Après utilisation, l'utilisateur peut rincer si désirer l'organe de mélange et/ou le remettre en place sur le support latéral en vue de la prochaine utilisation.

Selon une forme de réalisation préférée, l'organe de mélange présente un manche creux formant un conduit débouchant. Cette disposition permet l'ajout d'ingrédients lorsque l'organe de mélange est en place dans l'ouverture du couvercle.

Avantageusement alors, le manche creux est susceptible d'être engagé sur le support latéral. Cette disposition permet de laisser libre la partie inférieure de l'organe de mélange prévue pour venir en contact avec les aliments dans le réceptacle.

Avantageusement encore, pour limiter les manipulations de l'organe de mélange et faciliter le remplissage des ingrédients dans le réceptacle, le manche creux forme un entonnoir.

Avantageusement encore, pour éviter les projections hors du réceptacle lors du fonctionnement de l'appareil, un élément d'obturation est prévu pour être engagé dans une extrémité du manche creux.

Avantageusement alors l'élément d'obturation forme un contenant. L'élément d'obturation peut ainsi servir de bouchon doseur.

Avantageusement encore, pour éviter les projections hors du réceptacle lors du fonctionnement de l'appareil en l'absence de l'organe de mélange, l'élément d'obturation est prévu pour être engagé dans l'ouverture du couvercle.

Avantageusement alors, pour faciliter l'extraction de l'élément d'obturation, le couvercle présente deux renfoncements latéraux adjacents à l'ouverture.

Avantageusement encore, pour faciliter le mélange des ingrédients dans le réceptacle ou encore pour faciliter l'introduction des ingrédients dans le réceptacle, l'organe de mélange forme une cuiller.

Avantageusement alors, la cuiller est réalisée en polypropylène. Cette matière présente l'avantage d'être moins rigide que l'ABS, le SAN ou le polycarbornate, ce qui facilite le raclage des préparations, et aussi la mise en place et le retrait de l'organe de mélange du support. Cette matière présente également l'avantage d'être facilement surmoulée sur une matière plus rigide telle que le polycarbonate. En alternative, la cuiller pourrait notamment être réalisée dans une matière souple, telle que par exemple du silicone.

Avantageusement alors ledit organe de mélange présente un manche creux réalisé au moins partiellement dans une matière plus rigide que la matière dans laquelle est réalisée la cuiller.

Selon une forme de réalisation avantageuse, l'appareil comporte une base recevant un récipient de travail formant le réceptacle. Le moteur de l'appareil est alors logé dans la base. En alternative, le moteur pourrait être intégré au récipient de travail.

Alors, selon une forme de réalisation préférée, le support latéral est issu de la base. Cette disposition permet de retirer le récipient de travail de la base en laissant en place l'organe de mélange sur le support. Le versement du contenu du réceptacle est alors facilité.

Avantageusement alors, le support latéral appartient à une pièce formant un anneau. Cette disposition permet de faciliter la réalisation du support latéral.

Avantageusement alors, le support latéral est monté amovible par rapport à un boîtier appartenant à la base. Cette disposition permet de faciliter le nettoyage du support latéral. Cette disposition permet aussi de faciliter la réalisation du support latéral.

Avantageusement alors le support latéral est susceptible d'occuper plusieurs positions par rapport au boîtier. Cette disposition permet notamment de placer le support de manière appropriée selon que l'utilisateur est droitier ou gaucher.

En alternative, le support latéral pourrait notamment être issu du récipient de travail ou du couvercle.

Avantageusement encore l'extrémité inférieure de l'organe de mélange en place sur le support latéral est agencée latéralement à distance de la partie inférieure dudit appareil. Cette disposition permet d'éviter que du liquide resté présent sur l'organe de mélange ne s'écoule sur la partie inférieure de l'appareil.

Ces buts sont atteints également avec un organe de mélange spécialement prévu pour un appareil électroménager de préparation culinaire selon l'une au moins des caractéristiques précitées, du fait que ledit organe de mélange présente un manche creux formant un entonnoir.

Ces buts sont atteints également avec un organe de mélange spécialement prévu pour un appareil électroménager de préparation culinaire selon l'une au moins des caractéristiques précitées du fait que ledit organe de mélange forme une cuiller réalisée en polypropylène.

Ces buts sont atteints également avec un organe de mélange spécialement prévu pour un appareil électroménager de préparation culinaire selon l'une au moins des caractéristiques précitées du fait que ledit organe de mélange forme une cuiller réalisée dans une matière souple.

Avantageusement alors, ledit organe de mélange présente un manche creux formant un entonnoir.

Avantageusement encore ledit organe de mélange comporte une collerette. Cette disposition permet de faciliter la mise en place de l'organe de mélange dans une ouverture du couvercle de l'appareil.

L'invention sera mieux comprise à l'étude d'un exemple de réalisation et de deux variantes, pris à titre nullement limitatif, illustrés dans les figures annexées, dans lesquelles :
- la figure 1 est une vue en perspective éclatée d'un appareil électroménager de préparation culinaire comportant un support latéral pour un organe de mélange selon l'invention,
- la figure 2 est une vue éclatée de face partiellement en coupe de l'appareil illustré sur la figure 1, dans laquelle l'organe de mélange est engagé dans l'ouverture du couvercle du récipient de travail.
- la figure 3 est une vue en perspective éclatée de l'organe de mélange et de l'élément d'obturation visibles sur les figures 1 et 2,
- la figure 4 est une vue de face de l'appareil illustré sur les figures 1 et 2, dans laquelle l'organe de mélange est en place sur le support latéral.
- la figure 5 est une variante de réalisation d'un appareil électroménager de préparation culinaire comportant un support latéral pour un organe de mélange selon l'invention, dans laquelle le support latéral appartient au récipient de travail,
- la figure 6 est une variante de réalisation d'un appareil électroménager de préparation culinaire comportant un support latéral pour un organe de mélange selon l'invention, dans laquelle le support latéral appartient au couvercle du récipient de travail.

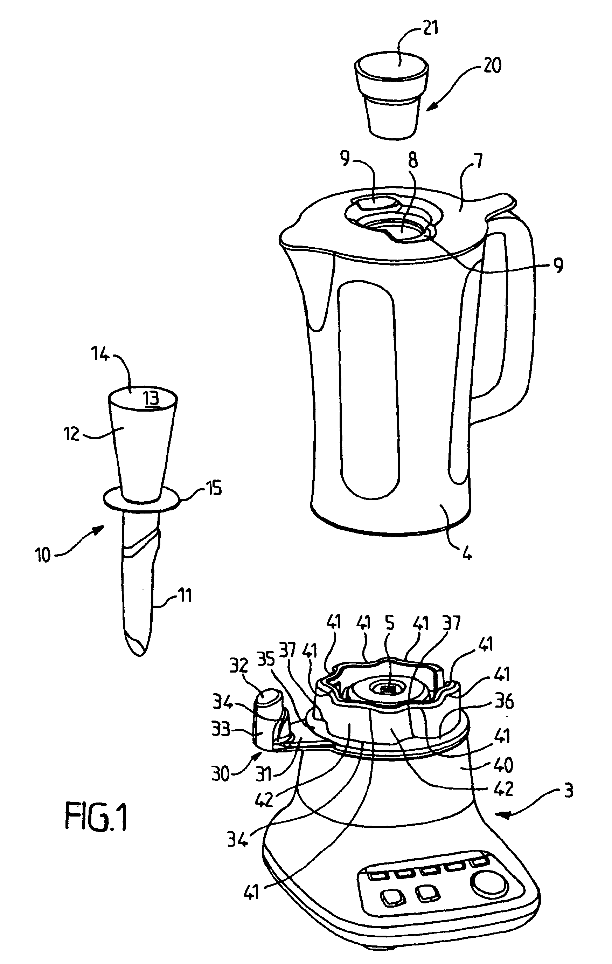

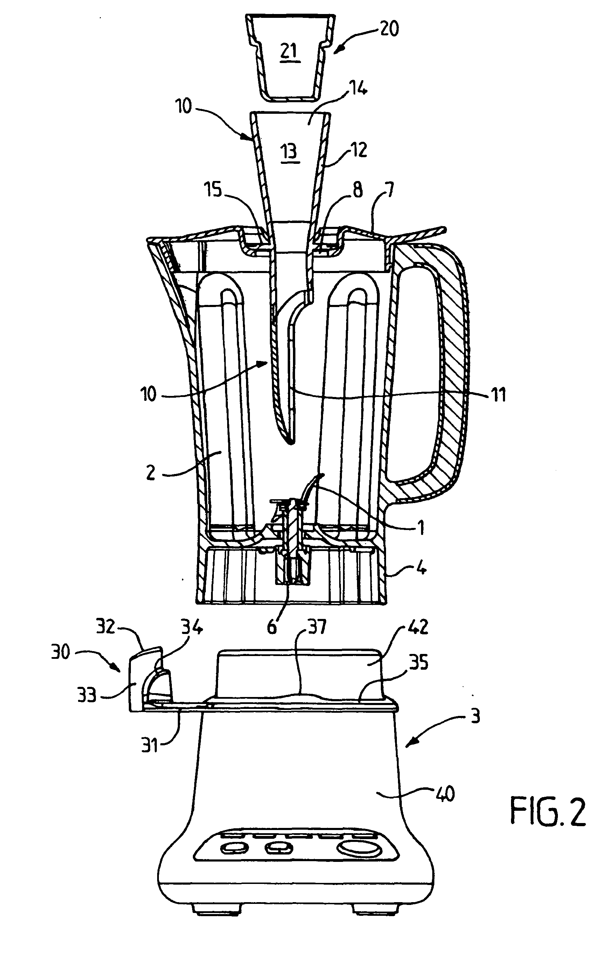

L'appareil électroménager de préparation culinaire illustré sur les figures 1 et 2 comporte un outil de travail rotatif 1 monté dans un réceptacle 2. Si désiré, l'outil de travail rotatif 1 peut être monté amovible.

Plus particulièrement, l'appareil comporte une base 3 recevant un récipient de travail 4 formant le réceptacle 2. Un moteur (non visible sur les figures) est logé dans la base 3. Le moteur est couplé à un dispositif d'entraînement 5 prévu pour coopérer avec un organe d'entraînement 6 disposé sous le récipient de travail 4 et relié à l'outil de travail rotatif 1. Ainsi, tel que bien visible sur la figure 2, l'outil de travail rotatif 1 est entraîné au travers du fond dudit du réceptacle 2 au moyen de l'organe d'entraînement 6.

Un couvercle 7 est associé au réceptacle 2. Le couvercle 7 présente une ouverture 8 avantageusement logée au fond d'une dépression. L'ouverture 8 s'étend sensiblement au dessus de l'outil de travail rotatif 1 monté dans le réceptacle 2. Le couvercle 7 présente deux renfoncements latéraux 9 adjacents à l'ouverture 8.

L'appareil comporte un organe de mélange 10, visible sur les figures 1 à 4.

L'organe de mélange 10 est susceptible d'être monté dans l'ouverture 8. Tel que bien visible sur la figure 2, l'organe de mélange 10 s'étend alors dans le réceptacle 2.

L'organe de mélange 10 forme une cuiller 11. Avantageusement la cuiller 11 peut toucher les parois du réceptacle 2 lorsque l'organe de mélange 10 est en place dans l'ouverture 8 du couvercle 7.

L'organe de mélange 10 présente un manche creux 12 formant un conduit 13 débouchant. Ainsi le manche creux 12 permet l'introduction d'aliments dans le réceptacle 2 par l'extrémité supérieure de l'organe de mélange 10 mis en place dans l'ouverture 8 du couvercle 7. Plus particulièrement, le manche creux 12 forme un entonnoir 14. Le versement d'ingrédients dans l'organe de mélange 10 en place dans l'ouverture 8 du couvercle 7 est ainsi facilité. L'entonnoir 14 est ménagé à l'extrémité du conduit 13 opposée à la cuiller 11. L'autre extrémité du conduit 13 débouche à proximité de la cuiller 11.

L'organe de mélange 10 présente une collerette 15 prévue pour prendre appui sur le couvercle 8 autour de l'ouverture 7. La collerette 15 est agencée entre la cuiller 11 et l'entonnoir 14.

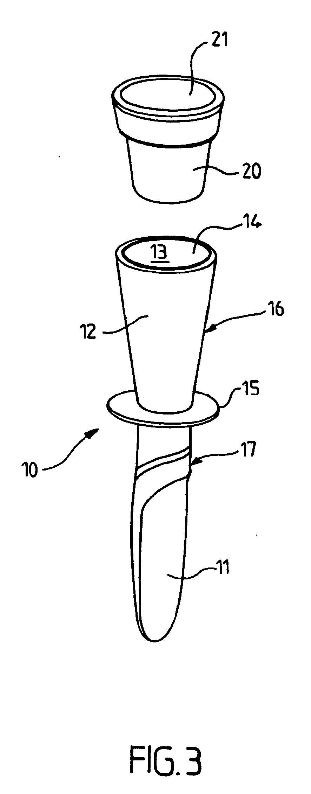

Si désiré la cuiller 11 et le manche creux 12 peuvent être réalisés dans des matières différentes. Tel que bien visible sur les figures 2 et 3, l'organe de mélange 10 comporte une pièce tubulaire 16 formant l'entonnoir 14, la collerette 15 et la majeure partie du conduit 13. La pièce tubulaire 16 est avantageusement réalisée dans une matière rigide, tel que par exemple en polycarbonate. L'organe de mélange 10 comporte également une pièce 17 formant la cuiller 11 et une partie du conduit 13 prolongeant la cuiller 11. La pièce 17 est réalisée dans une matière plus souple, tel que par exemple en polypropylène. La pièce 17 peut avantageusement être surmoulée sur la pièce tubulaire 16. Ainsi ledit organe de mélange 10 présente un manche creux 12 réalisé au moins partiellement dans une matière plus rigide que la matière dans laquelle est réalisée la cuiller 11.

L'appareil comporte un élément d'obturation 20, visible sur les figures 1 à 4.

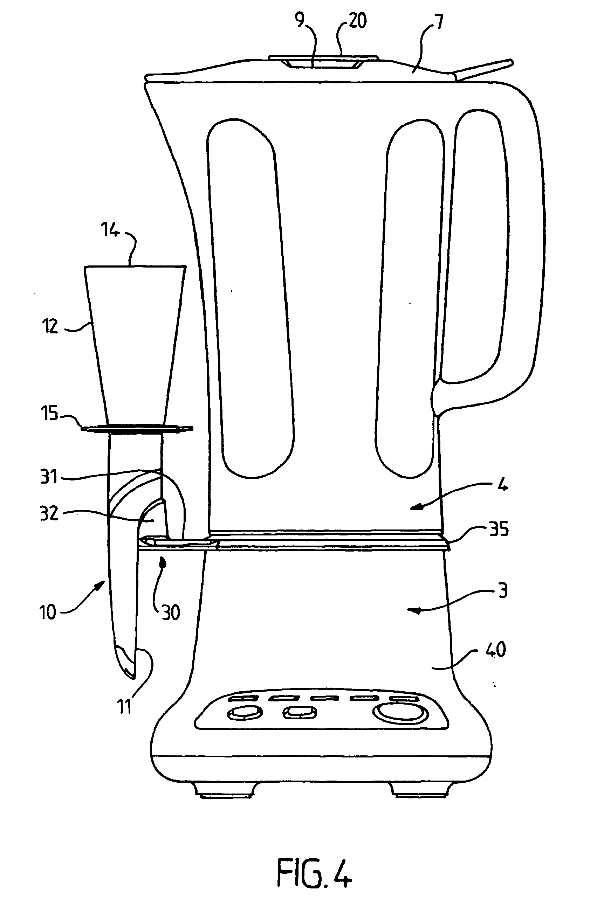

L'élément d'obturation 20 est prévu pour être mis en place dans l'ouverture 8 du couvercle 7, tel que représenté sur les figures 1 et 4. De plus l'élément d'obturation 20 est prévu pour être engagé dans une extrémité du manche creux 12. Plus particulièrement, l'élément d'obturation 20 est prévu pour être mis en place dans l'extrémité du manche creux 12 opposée à la cuiller 11, tel que représenté sur les figures 2 et 3.

Tel que représenté sur la figure 4, l'élément d'obturation 20 peut être mis en place dans l'ouverture 8 du couvercle 7 à la place de l'organe de mélange 10.

L'élément d'obturation 20 forme avantageusement un contenant 21. L'élément d'obturation 20 peut notamment être gradué et former ainsi un bouchon doseur.

En alternative, l'élément d'obturation 20 peut présenter au moins un orifice prévu pour l'écoulement d'un liquide dans le réceptacle 2 lorsque l'élément d'obturation 20 est en place dans l'ouverture 8 ou l'organe de mélange 10.

L'appareil comporte un support latéral 30 prévu pour recevoir l'organe de mélange 10. Le support latéral 30 présente un bras 31 surmonté d'une protubérance 32. La protubérance 32 présente avantageusement un organe de retenue 33 et un organe de support 34. Le manche creux 12 est susceptible d'être engagé sur le support latéral 30.

Plus particulièrement, le support latéral 30 est issu de la base 3. Selon la réalisation préférée illustrée aux figures 1, 2 et 4, le support latéral 30 appartient à une pièce 35 formant un anneau 36. Le support latéral 30 est avantageusement monté amovible par rapport à un boîtier 40 appartenant à la base 3. A cet effet, l'anneau 36 présente des conformations internes 37 prévues pour coopérer avec des conformations latérales 41 ménagées sur une partie supérieure 42 du boîtier 40. Le support latéral 30 est avantageusement susceptible d'occuper plusieurs positions par rapport au boîtier 40. Pour la réalisation préférée montrée sur la figure 1, les conformations internes 37 sont au nombre de quatre et les conformations latérales 41 sont au nombre de huit. Ainsi l'utilisateur peut choisir huit positions pour le support latéral 30 sur le boîtier 40.

Avantageusement l'extrémité inférieure de l'organe de mélange 10 en place sur le support latéral 30 est agencée latéralement à distance de la partie inférieure de l'appareil, tel que représenté sur la figure 4.

L'organe de mélange 10 permet de prélever des ingrédients à l'aide de la cuiller 11 pour les verser dans le réceptacle 2 par l'ouverture 8. L'organe de mélange 10 peut aussi servir d'entonnoir 14 pour verser des ingrédients par le conduit 13 dans le réceptacle 2 par l'ouverture 8. L'organe de mélange 10 en place dans le réceptacle 2 peut également être utilisé pour mélanger les ingrédients présents dans le réceptacle 2 et/ou pour racler les aliments présents contre la paroi interne du réceptacle 2, notamment lors de la réalisation de purée de pois chiches.

L'élément d'obturation 20 peut être utilisé pour boucher l'extrémité du manche creux 12 ou pour obturer directement l'ouverture 8 du couvercle 7.

Le support latéral 30 peut être utilisé pour recevoir l'organe de mélange 10, tel que représenté sur la figure 4, dans laquelle le manche creux 12 est engagé sur le support latéral 30. L'organe de retenue 33 est alors engagé dans l'extrémité du conduit 13 adjacente à la cuiller 11 et la cuiller 11 repose sur l'organe de support 34. Si désiré, le support latéral 30 peut aussi être utilisé pour recevoir l'élément d'obturation 20 retourné.

L'utilisateur peut choisir l'orientation du support latéral 30 par rapport au boîtier 40 en positionnant les conformations internes 37 de l'anneau 36 en regard des conformations latérales 41 appropriées du boîtier 40.

Ainsi le support latéral 30 peut être placé sur la gauche de l'appareil, tel qu'illustré sur les figures 1, 2 et 4, mais aussi sur la droite de l'appareil, en face avant ou en face arrière ou encore dans toute autre position intermédiaire permise par les conformations internes 37 de l'anneau 36. Le support latéral 30 n'est donc pas nécessairement placé sur le côté de l'appareil.

L'appareil selon l'invention est ainsi particulièrement pratique à utiliser.

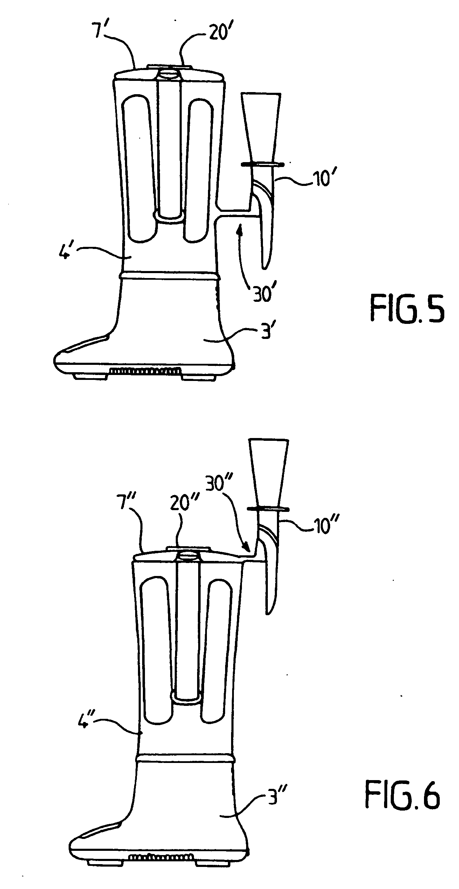

La figure 5 illustre une variante de réalisation différant de l'exemple de réalisation illustré sur les figures 1 à 4 en ce que le support latéral 30' prévu pour recevoir l'organe de mélange 10' est issu du récipient de travail 4', et non de la base 3' ou du couvercle 7'.

L'élément d'obturation 20' visible sur le couvercle 7' peut également être utilisé avec l'organe de mélange 10', comme pour l'élément d'obturation 20 et l'organe de mélange 10 de l'exemple de réalisation illustré aux figures 1 à 4.

A titre de variante complémentaire, le support latéral 30' n'est pas nécessairement disposé sur la face arrière de l'appareil tel qu'illustré sur la figure 5.

La figure 6 illustre une variante de réalisation différant de l'exemple de réalisation illustré sur les figures 1 à 4 en ce que le support latéral 30" est issu du couvercle 7", et non du récipient de travail 4" ou de la base 3".

L'élément d'obturation 20" visible sur le couvercle 7" peut également être utilisé avec l'organe de mélange 10", comme pour l'élément d'obturation 20 et l'organe de mélange 10 de l'exemple de réalisation illustré aux figures 1 à 4.

A titre de variante complémentaire, le support latéral 30" n'est pas nécessairement disposé sur la face arrière de l'appareil tel qu'illustré sur la figure 6.

A titre de variante complémentaire, la cuiller 11 pourrait être réalisée dans une matière souple, tel que par exemple en silicone.

A titre de variante complémentaire, l'organe de mélange 10; 10' ; 10" peut notamment être réalisé en une seule matière.

A titre de variante complémentaire, l'organe de mélange 10 ; 10' ; 10" peut être dépourvu de collerette 15.

A titre de variante complémentaire, le moteur pourrait être intégré au récipient de travail 4, 4', 4". La présence d'une base 3, 3', 3" n'est alors plus nécessaire.

A titre de variante complémentaire, la protubérance 33 ne s'étend pas nécessairement selon une direction verticale, mais pourrait notamment être inclinée, par exemple en direction de la face avant de l'appareil.

La présente invention n'est nullement limitée à l'exemple de réalisation décrit et à ses variantes, mais englobe de nombreuses modifications dans le cadre des revendications.

## Revendications

1. Appareil électroménager de préparation culinaire comportant un outil de travail rotatif (1) monté dans un réceptacle (2), et un organe de mélange (10 ; 10' ; 10") susceptible d'être monté dans une ouverture (8) d'un couvercle (7) associé au réceptacle (2), ledit organe de mélange (10 ; 10' ; 10") s'étendant alors dans ledit réceptacle (2), ledit outil de travail rotatif (1) étant entraîné au travers du fond dudit réceptacle (2), **caractérisé en ce que** ledit appareil comporte un support latéral (30 ; 30' ; 30") prévu pour recevoir l'organe de mélange (10 ; 10' ; 10").

2. Appareil électroménager de préparation culinaire selon la revendication 1, **caractérisé en ce que** l'organe de mélange (10 ; 10' ; 10") présente un manche creux (12) formant un conduit (13) débouchant.

3. Appareil électroménager de préparation culinaire selon la revendication 2, **caractérisé en ce que** le manche creux (12) est susceptible d'être engagé sur le support latéral (30 ; 30' ; 30").

4. Appareil électroménager de préparation culinaire selon l'une des revendications 2 ou 3, **caractérisé en ce que** le manche creux (12) forme un entonnoir (14).

5. Appareil électroménager de préparation culinaire selon l'une des revendications 2 à 4, **caractérisé en ce qu'**un élément d'obturation (20) est prévu pour être engagé dans une extrémité du manche creux (12).

6. Appareil électroménager de préparation culinaire selon la revendication 5, **caractérisé en ce que** l'élément d'obturation (20) forme un contenant (21).

7. Appareil électroménager de préparation culinaire selon l'une des revendications 5 ou 6, **caractérisé en ce que** l'élément d'obturation (20) est prévu pour être engagé dans l'ouverture (8) du couvercle (7).

8. Appareil électroménager de préparation culinaire selon la revendication 7, **caractérisé en ce que** le couvercle (7) présente deux renfoncements latéraux (9) adjacents à l'ouverture (8).

9. Appareil électroménager de préparation culinaire selon l'une des revendications 1 à 8, **caractérisé en ce que** l'organe de mélange (10 ; 10' ; 10") forme une cuiller (11).

10. Appareil électroménager de préparation culinaire selon la revendication 9, **caractérisé en ce que** la cuiller (11) est réalisée en polypropylène.

11. Appareil électroménager de préparation culinaire selon l'une des revendications 1 à 10, **caractérisé en ce que** l'appareil comporte une base (3 ; 3' ; 3") recevant un récipient de travail (4 ; 4' ; 4") formant le réceptacle (2).

12. Appareil électroménager de préparation culinaire selon la revendication 11, **caractérisé en ce que** le support latéral (30) est issu de la base (3).

13. Appareil électroménager de préparation culinaire selon la revendication 12, **caractérisé en ce que** le support latéral (30) appartient à une pièce (35) formant un anneau (36).

14. Appareil électroménager de préparation culinaire selon l'une des revendications 12 ou 13, **caractérisé en ce que** le support latéral (30) est monté amovible par rapport à un boîtier (40) appartenant à la base (3).

15. Appareil électroménager de préparation culinaire selon la revendication 14, **caractérisé en ce que** le support latéral (30) est susceptible d'occuper plusieurs positions par rapport au boîtier (40).

16. Appareil électroménager de préparation culinaire selon l'une des revendications 1 à 15, **caractérisé en ce que** l'extrémité inférieure de l'organe de mélange (10 ; 10' ; 10") en place sur le support latéral (30 ; 30' ; 30") est agencée latéralement à distance de la partie inférieure dudit appareil.

## Claims

1. Electrical household food preparation appliance comprising a rotary working tool (1) mounted inside a receptacle (2), and a mixing element (10; 10 ; 10") that can be mounted in an opening (8) of a lid (7) associated with the receptacle (2), said mixing element (10; 10'; 10") then extending into said receptacle (2), said rotary working tool (1) being driven through the bottom of said receptacle (2), **characterised in that** said appliance comprises a lateral support (30; 30'; 30") intended to receive the mixing element (10; 10'; 10").

2. Electrical household food preparation appliance according to claim 1, **characterised in that** the mixing element (10; 10'; 10") has a hollow handle (12) forming a through duct (13).

3. Electrical household food preparation appliance according to claim 2, **characterised in that** the hollow handle (12) is capable of being engaged on the side support (30; 30'; 30").

4. Electrical household food preparation appliance according to one of claims 2 or 3, **characterised in that** the hollow handle (12) forms a funnel (14).

5. Electrical household food preparation appliance according to one of claims 2 to 4, **characterised in that** a sealing element (20) is intended to be engaged in an end of the hollow handle (12).

6. Electrical household food preparation appliance according to claim 5, **characterised in that** the sealing element (20) forms a container (21).

7. Electrical household food preparation appliance according to one of claims 5 or 6, **characterised in that** the sealing element (20) is intended to be engaged in the opening (8) of the lid (7).

8. Electrical household food preparation appliance according to claim 7, **characterised in that** the lid (7) has two lateral recesses (9) adjacent to the opening (8).

9. Electrical household food preparation appliance according to one of claims 1 to 8, **characterised in that** the mixing element (10; 10'; 10") forms a spoon (11).

10. Electrical household food preparation appliance according to claim 9, **characterised in that** the spoon (11) is made of polypropylene.

11. Electrical household food preparation appliance according to one of claims 1 to 10, **characterised in that** the appliance comprises a base (3; 3'; 3") receiving the working container (4; 4'; 4") forming the receptacle (2).

12. Electrical household food preparation appliance according to claim 11, **characterised in that** the lateral support (30) rises from the base (3).

13. Electrical household food preparation appliance according to claim 12, **characterised in that** the lateral support (30) belongs to a part (35) forming a ring (36).

14. Electrical household food preparation appliance according to one of claims 12 or 13, **characterised in that** the lateral support (30) is removably mounted to a housing (40) belonging to the base (3).

15. Electrical household food preparation appliance according to claim 14, **characterised in that** the lateral support (30) is capable of occupying several positions with respect to the housing (40).

16. Electrical household food preparation appliance according to one of claims 1 to 15, **characterised in that** the lower end of the mixing element (10; 10'; 10") in place on the lateral support (30; 30'; 30") is arranged laterally at a distance from the lower part of said appliance.

## Patentansprüche

1. Elektrohaushaltsgerät für kulinarische Zubereitungen, umfassend ein drehendes Arbeitswerkzeug (1), das in einer Aufnahme (2) befestigt ist, und ein Mischelement (10; 10'; 10"), das in einer Öffnung (8) eines Deckels (7), der mit der Aufnahme (2) verbunden ist, befestigt werden kann, wobei sich das Mischelement (10 ; 10' ; 10") dann in die Aufnahme (2) erstreckt, wobei das drehende Arbeitswerkzeug (1) durch den Boden der Aufnahme (2) angetrieben wird, **dadurch gekennzeichnet, dass** das Gerät eine seitliche Halterung (30 ; 30' ; 30") umfasst, die zum Aufnehmen des Mischelements (10 ; 10' ; 10") vorgesehen ist.

2. Elektrohaushaltsgerät für kulinarische Zubereitungen nach Anspruch 1, **dadurch gekennzeichnet, dass** das Mischelement (10; 10'; 10") einen Hohlstiel (12) aufweist, der ein einmündendes Rohr (13) bildet.

3. Elektrohaushaltsgerät für kulinarische Zubereitungen nach Anspruch 2, **dadurch gekennzeichnet, dass** der Hohlstiel (12) auf die seitliche Halterung (30 ; 30' ; 30") aufgesetzt werden kann.

4. Elektrohaushaltsgerät für kulinarische Zubereitungen nach einem der Ansprüche 2 oder 3, **dadurch gekennzeichnet, dass** der Hohlstiel (12) einen Trichter (14) bildet.

5. Elektrohaushaltsgerät für kulinarische Zubereitungen nach einem der Ansprüche 2 bis 4, **dadurch gekennzeichnet, dass** ein Verschlusselement (20) vorgesehen ist, um in ein Ende des Hohlstiels (12) eingesetzt zu werden.

6. Elektrohaushaltsgerät für kulinarische Zubereitungen nach Anspruch 5, **dadurch gekennzeichnet, dass** das Verschlusselement (20) einen Behälter (21) bildet.

7. Elektrohaushaltsgerät für kulinarische Zubereitungen nach einem der Ansprüche 5 oder 6, **dadurch gekennzeichnet, dass** das Verschlusselement (20) vorgesehen ist, um in die Öffnung (8) des Deckels (7) eingesetzt zu werden.

8. Elektrohaushaltsgerät für kulinarische Zubereitungen nach Anspruch 7, **dadurch gekennzeichnet, dass** der Deckel (7) zwei seitliche Vertiefungen (9) aufweist, die an die Öffnung (8) angrenzen.

9. Elektrohaushaltsgerät für kulinarische Zubereitungen nach einem der Ansprüche 1 bis 8, **dadurch gekennzeichnet, dass** das Mischelement (10 ; 10' ; 10") einen Löffel (11) bildet.

10. Elektrohaushaltsgerät für kulinarische Zubereitungen nach Anspruch 9, **dadurch gekennzeichnet, dass** der Löffel (11) aus Polypropylen hergestellt ist.

11. Elektrohaushaltsgerät für kulinarische Zubereitungen nach einem der Ansprüche 1 bis 10, **dadurch gekennzeichnet, dass** das Gerät einen Sockel (3 ; 3' ; 3") umfasst, der einen Arbeitsbehälter (4 ; 4' ; 4") aufnimmt, der die Aufnahme (2) bildet.

12. Elektrohaushaltsgerät für kulinarische Zubereitungen nach Anspruch 11, **dadurch gekennzeichnet, dass** die seitliche Halterung (30) aus dem Sockel (3) hervorgeht.

13. Elektrohaushaltsgerät für kulinarische Zubereitungen nach Anspruch 12, **dadurch gekennzeichnet, dass** die seitliche Halterung (30) einem Teil (35) angehört, das einen Ring (36) bildet.

14. Elektrohaushaltsgerät für kulinarische Zubereitungen nach einem der Ansprüche 12 oder 13, **dadurch gekennzeichnet, dass** die seitliche Halterung (30) in Bezug auf ein Gehäuse (40), das dem Sockel (3) angehört, abnehmbar befestigt ist.

15. Elektrohaushaltsgerät für kulinarische Zubereitungen nach Anspruch 14, **dadurch gekennzeichnet, dass** die seitliche Halterung (30) in Bezug auf das Gehäuse (40) mehrere Positionen einnehmen kann.

16. Elektrohaushaltsgerät für kulinarische Zubereitungen nach einem der Ansprüche 1 bis 15, **dadurch gekennzeichnet, dass** das untere Ende des Mischelements (10 ; 10' ; 10"), das sich auf der seitlichen Halterung (30 ; 30' ; 30") befindet, seitlich beabstandet vom unteren Teil des Geräts angeordnet ist.
